# EUROPÄISCHE PATENTSCHRIFT

(11) **EP 3 359 416 B1**
(45) Veröffentlichungstag und Bekanntmachung des Hinweises auf die Patenterteilung: **18.01.2023**
(21) Anmeldenummer: 16775752.5
(22) Anmeldetag: 05.10.2016
(51) Int. Cl.: B60N 2/75, B60N 2/821, B60N 2/829, B60N 2/85, B60N 2/853

(54) **KOPFSTÜTZE EINES FAHRZEUGSITZES**
HEADREST OF A VEHICLE SEAT
APPUI-TÊTE D'UN SIÈGE DE VÉHICULE

(30) Priorität: 05.10.2015 DE 102015219210
(43) Veröffentlichungstag der Anmeldung: 15.08.2018
(73) Patentinhaber: Adient US LLC, Plymouth, MI 48170 (US)
(72) Erfinder: DILLINGER, Thomas, 40880 Ratingen (DE)
(74) Vertreter: Schwöbel, Thilo K.
(86) Internationale Anmeldenummer: PCT/EP2016/073813
(87) Internationale Veröffentlichungsnummer: WO 2017/060313

(56) Entgegenhaltungen:
- US-A- 2 837 931
- US-A- 4 674 790
- US-A- 5 222 784
- US-A1- 2015 130 247

## Beschreibung

Die Erfindung betrifft eine Kopfstütze eines Fahrzeugsitzes, wobei die Kopfstütze eine erste Kopfstützvorrichtung und eine zweite Kopfstützvorrichtung umfasst, wobei die Kopfstütze eine Kippvorrichtung zum Kippen der ersten Kopfstützvorrichtung relativ zu der zweiten Kopfstützvorrichtung umfasst, wobei die Kopfstütze eine Höheneinstellvorrichtung zum Einstellen der Höhe der ersten Kopfstützvorrichtung relativ zu der zweiten Kopfstützvorrichtung umfasst. Des Weiteren betrifft die Erfindung einen Fahrzeugsitz, eine Armstütze und eine Vorrichtung.

### Stand der Technik

Fahrzeugsitze mit einer Kopfstütze und mit einer Rückenlehne sind allgemein bekannt. Es sind Fahrzeugsitze bekannt, die eine Kippvorrichtung zum Kippen der Kopfstütze relativ zu der Rückenlehne umfassen. Bei solchen Fahrzeugsitzen ist beispielsweise die Kippvorrichtung in der Kopfstütze oder in der Rückenlehne angeordnet bzw. im Fahrzeugsitz bzw. im Sitz integriert. Eine solche Kippvorrichtung ermöglicht beispielsweise eine bessere Sicht, wenn der Fahrzeugsitz nicht besetzt ist. Außerdem sind Fahrzeugsitze bekannt, die eine Höheneinstellvorrichtung zum Einstellen der Höhe der Kopfstütze relativ zu der Rückenlehne umfassen. Bei solchen Fahrzeugsitzen ist beispielsweise die Höheneinstellvorrichtung in der Kopfstütze angeordnet.

Aus der US 2015/130247 A1 und der US 2 837 931 A sind in diesem Zusammenhang Kopfstützten bekannt, die durch ein Schneckengetriebe verkippt werden können. Weitere verkippbare Kopfstützen sind aus den Druckschriften US 5 222 784 A und US 4 674 790 A bekannt.

### Offenbarung der Erfindung

Aufgabe der Erfindung ist es, eine kippbare und höhenverstellbare Kopfstütze für einen Fahrzeugsitz mit im Vergleich zum Stand der Technik geringem Gewicht und auf im Vergleich zum Stand der Technik platz- und kostensparende Weise bereitzustellen.

Die Aufgabe wird gelöst durch eine Kopfstütze gemäß Anspruch 1. Dadurch, dass die Kopfstütze die Kippvorrichtung und die Höheneinstellvorrichtung umfasst, kann auf eine Kippvorrichtung und Höheneinstellvorrichtung in der Rückenlehne verzichtet werden. Hierdurch wird ein insgesamt platzsparender, leichter und kostengünstiger Fahrzeugsitz ermöglicht. Insbesondere ist ein platzsparendes Design der Kopfstütze in gekippter Stellung der Kopfstütze möglich. Außerdem kann mithilfe der Kippvorrichtung und Höheneinstellvorrichtung eine Kollision der Kopfstütze mit der Rückenlehne bei gekippter Kopfstütze bzw. beim Kippen der Kopfstütze vermieden werden. Somit wird die Gestaltungfreiheit beim Gestalten der Kopfstütze und der Rückenlehne insbesondere bei der Gestaltung der dreidimensionalen Form der Kopfstütze und der Rückenlehne erhöht.

Gemäß einer vorteilhaften Ausgestaltung ist die zweite Kopfstützvorrichtung mit dem Fahrzeugsitz, bevorzugt mit einer Rückenlehne des Fahrzeugsitzes, verbunden, bevorzugt kraftschlüssig und/oder formschlüssig und/oder stoffschlüssig verbunden.

Gemäß einer vorteilhaften Ausgestaltung sind die Kippvorrichtung und/oder die Höheneinstellvorrichtung zwischen einer, bevorzugt einem in dem Fahrzeugsitz platznehmenden Insassen zugewandten, Frontverkleidung der Kopfstütze und einer, bevorzugt von dem Insassen abgewandten, Rückverkleidung der Kopfstütze angeordnet. Hierdurch wird ein besonders kompakter und platzsparender Fahrzeugsitz ermöglicht, da die Kippvorrichtung und/oder die Höheneinstellvorrichtung innerhalb einer Verkleidung der Kopfstütze angeordnet sind und Kippvorrichtung und/oder Höheneinstellvorrichtung nicht in Bereichen außerhalb der Kopfstütze und/oder außerhalb der Rückenlehne angeordnet sein müssen. Insbesondere ist die Kopfstütze derart ausgebildet, dass die Kopfstütze in gekippter bzw. eingeklappter Stellung besonders platzsparend gegenüber aus dem Stand der Technik bekannten Kopfstützen ausgebildet ist.

Erfindungsgemäß ist vorgesehen, dass die Kippvorrichtung und insbesondere auch die Höheneinstellvorrichtung mithilfe einer Antriebseinheit antreibbar, insbesondere elektrisch antreibbar, sind. Hierdurch wird auf vorteilhafte Weise eine Kopfstütze für einen Fahrzeugsitz mit antreibbarer Kippvorrichtung und insbesondere einer antreibbaren Höheneinstellvorrichtung bereitgestellt.

Gemäß einer vorteilhaften Ausgestaltung ist die Antriebseinheit zwischen der Frontverkleidung und der Rückverkleidung angeordnet. Insofern ist es möglich, einen besonders platzsparenden Fahrzeugsitz mit einer antreibbaren, höhenverstellbaren und kippbaren Kopfstütze bereitzustellen.

Erfindungsgemäß umfasst die Antriebseinheit einen Motor und ein Schneckengetriebe. Insbesondere ermöglicht das Schneckengetriebe eine ein-Schritt-Schneckengetriebe-Übertragung bzw. eine drei-Schritt-Schneckengetriebe-Übertragung. Hierdurch wird ein hohes Übersetzungsverhältnis bereitgestellt bzw. ermöglicht. Somit wird insbesondere der Einsatz eines im Verhältnis zum Stand der Technik kleinen bzw. leistungsschwachen Motor ermöglicht. Somit können Kippvorrichtung und/oder Höheneinstellvorrichtung und Motor zwischen der Frontverkleidung und der Rückverkleidung angeordnet werden und somit ein im Vergleich zum Stand der Technik platzsparender Fahrzeugsitz bereitgestellt werden. Durch eine derartige Anordnung kann außerdem im Vergleich zum Stand der Technik auf weitere Bauteile verzichtet werden und somit ein Fahrzeugsitz mit im Vergleich zum Stand der Technik geringem Gewicht und geringen Material- und Herstellungskosten bereitgestellt werden.

Erfindungsgemäß ist vorgesehen, dass die Kippvorrichtung mithilfe des Schneckengetriebes antreibbar ist. Hierdurch ist eine selbsthemmende bzw. selbstsichernde Auslegung des Schneckengetriebes bzw. der Kippvorrichtung möglich.

Gemäß einer vorteilhaften Ausgestaltung ist die Kopfstütze derart ausgebildet, dass Festigkeits- bzw. Kraftlinienanforderungen für Kopfstützen bzw. Fahrzeugsitze erfüllbar sind. In anderen Worten erfüllt die erfindungsgemäße Kopfstütze strength und load path. Dies ist insbesondere eine Herausforderung bei einer Ausbildung mit einem großen Hebelarm und/oder einem platzsparenden Design. Die Kopfstütze ist insbesondere derart ausgebildet, dass hohe Kräfte, welche auf die Kopfstütze beispielsweise bei einem Auffahrunfall bzw. einem rear-end crash bzw. einer rear-end collision wirken, nicht auf die Antriebseinheit übertragbar sind bzw. lediglich in Form von geringen Kräften auf die Antriebseinheit wirken. Insbesondere durch eine sichere Auslegung der ein-Schritt-Schneckengetriebe-Übertragung ist die Kippvorrichtung selbsthemmend bzw. selbstsichernd ausgebildet und verhindert so eine Übertragung der hohen Kräfte auf die Antriebseinheit und somit eine Überlastung der Antriebseinheit.

Ein weiterer Gegenstand der vorliegenden Erfindung ist ein Fahrzeugsitz gemäß Anspruch 5. Bevorzugt umfasst die erste Fahrzeugsitzvorrichtung eine in den Fahrzeugsitz integrierte Kopfstütze. Außerdem sind die Kippvorrichtung und/oder die Höheneinstellvorrichtung bevorzugt zwischen einer, bevorzugt einem in dem Fahrzeugsitz platznehmenden Insassen zugewandten, Frontverkleidung des Fahrzeugsitzes und einer, bevorzugt von dem Insassen abgewandten, Rückverkleidung des Fahrzeugsitzes angeordnet. Des Weiteren umfasst der Fahrzeugsitz bevorzugt eine in die erste Fahrzeugsitzvorrichtung integrierte Kopfstütze, bevorzugt eine erfindungsgemäße Kopfstütze. Besonders bevorzugt ist vorgesehen, dass der Fahrzeugsitz eine Rückenlehne umfasst, wobei die Rückenlehne sowohl die erste Fahrzeugsitzvorrichtung als auch die zweite Fahrzeugsitzvorrichtung umfasst, wobei bevorzugt die erste Fahrzeugsitzvorrichtung eine in den Fahrzeugsitz integrierte Kopfstütze (integrated head rest, integrated HR) umfasst bzw. die erste Fahrzeugsitzvorrichtung die integrierte Kopfstütze ist. Die Kippvorrichtung und und insbesondere auch die Höheneinstellvorrichtung sind mithilfe einer Antriebseinheit antreibbar, insbesondere elektrisch antreibbar. Außerdem ist bevorzugt vorgesehen, dass die Antriebseinheit zwischen der Frontverkleidung und der Rückverkleidung angeordnet ist. Ferner umfasst die Antriebseinheit einen Motor und ein Schneckengetriebe. Außerdem ist die Kippvorrichtung mithilfe des Schneckengetriebes antreibbar. Erfindungsgemäß bevorzugt ist vorgesehen, dass der Fahrzeugsitz die erfindungsgemäße Kippvorrichtung zum Kippen der ersten Fahrzeugsitzvorrichtung gegenüber der zweiten Fahrzeugsitzvorrichtung umfasst. Beispielsweise ist vorgesehen, dass die erste Fahrzeugsitzvorrichtung eine Rückenlehne umfasst und dass die zweite Fahrzeugsitzvorrichtung eine Sitzfläche umfasst.

Die vorstehend beschriebene Kippvorrichtung lässt sich auch bei einer Armstütze eines Fahrzeugsitzes einsetzen, wobei die Armstütze eine erste Armstützvorrichtung und eine zweite Armstützvorrichtung umfasst, wobei die Armstütze eine Kippvorrichtung zum Kippen der ersten Armstützvorrichtung relativ zu der zweiten Armstützvorrichtung umfasst, wobei die Armstütze eine Höheneinstellvorrichtung zum Einstellen der Höhe der ersten Armstützvorrichtung relativ zu der zweiten Armstützvorrichtung umfasst. Bevorzugt ist die zweite Armstützvorrichtung mit dem Fahrzeugsitz, bevorzugt mit einer Rückenlehne des Fahrzeugsitzes und/oder mit einer Sitzfläche des Fahrzeugsitzes, verbunden, bevorzugt kraftschlüssig und/oder formschlüssig und/oder stoffschlüssig verbunden. Außerdem sind die Kippvorrichtung und/oder die Höheneinstellvorrichtung bevorzugt zwischen einer, bevorzugt einem in dem Fahrzeugsitz platznehmenden Insassen zugewandten Frontverkleidung der Armstütze und einer, bevorzugt von dem Insassen abgewandten, Rückverkleidung der Armstütze angeordnet. Des Weiteren ist bevorzugt vorgesehen, dass die Armstütze die Kippvorrichtung zum Kippen der Armstütze relativ zu einer Rückenlehne des Fahrzeugsitzes und/oder relativ zu einer Sitzfläche des Fahrzeugsitzes umfasst. Bevorzugt umfasst die Armstütze eine Höheneinstellvorrichtung zum Einstellen der Höhe der Armstütze relativ zu der Rückenlehne des Fahrzeugsitzes und/oder relativ zu der Sitzfläche des Fahrzeugsitzes. Außerdem ist vorgesehen, dass die Kippvorrichtung und insbesondere auch die Höheneinstellvorrichtung mithilfe einer Antriebseinheit antreibbar, insbesondere elektrisch antreibbar sind. Ferner ist die Antriebseinheit bevorzugt zwischen der Frontverkleidung und der Rückverkleidung angeordnet. Außerdem umfasst die Antriebseinheit einen Motor und ein Schneckengetriebe. Des Weiteren ist die Kippvorrichtung mithilfe des Schneckengetriebes antreibbar. Außerdem ist bevorzugt vorgesehen, dass die Armstütze gegenüber einer Rückenlehne des Fahrzeugsitzes und/oder gegenüber einer Sitzfläche des Fahrzeugsitzes mithilfe der erfindungsgemäßen Kippvorrichtung schwenkbar ausgebildet ist.

Ein weiterer Gegenstand der vorliegenden Erfindung ist eine Vorrichtung gemäß Anspruch 8.. Bevorzugt ist vorgesehen, dass die Vorrichtung eine erfindungsgemäße Kopfstütze und/oder einen erfindungsgemäßen Fahrzeugsitz und/oder eine erfindungsgemäße Armstütze umfasst. Bevorzugt ist vorgesehen, dass das erste Vorrichtungselement eine erste Kopfstützvorrichtung der erfindungsgemäßen Kopfstütze umfasst und dass das zweite Vorrichtungselement eine zweite Kopfstützvorrichtung der erfindungsgemäßen Kopfstütze umfasst. Außerdem ist bevorzugt vorgesehen, dass das erste Vorrichtungselement eine erste Fahrzeugsitzvorrichtung des erfindungsgemäßen Fahrzeugsitzes umfasst und dass das zweite Vorrichtungselement eine zweite Fahrzeugsitzvorrichtung des erfindungsgemäßen Fahrzeugsitzes umfasst. Ferner ist bevorzugt vorgesehen, dass das erste Vorrichtungselement eine erste Armstützvorrichtung der erfindungsgemäßen Armstütze umfasst und dass das zweite Vorrichtungselement eine zweite Armstützvorrichtung der erfindungsgemäßen Armstütze umfasst.

Insbesondere aufgrund der platzsparenden Ausbildung und dem Hohen Widerstand des Mechanismus der Kippvorrichtung und/oder der Höheneinstellvorrichtung und/oder der Antriebseinheit ist eine Verwendung der Kippvorrichtung und/oder der Höheneinstellvorrichtung und/oder der Antriebseinheit in weiteren Bereichen, beispielsweise in Fahrzeugsitzen, vorgesehen.

Die im Zusammenhang mit der Kopfstütze beschriebenen vorteilhaften Merkmale und Wirkungen gelten allein oder in Kombination entsprechend auch für den erfindungsgemäßen Fahrzeugsitz, die oben beschriebene Armstütze und die erfindungsgemäße Vorrichtung.

Weitere Einzelheiten und Vorteile der Erfindung werden nachfolgend anhand der in den Figuren dargestellten Ausführungsbeispiele beschrieben. Hierin zeigt:
- **Fig. 1**: eine aus dem Stand der Technik bekannte Kopfstütze in einer schematischen Darstellung;
- **Fig. 2**: eine Kopfstütze gemäß einem ersten Ausführungsbeispiel in einer schematischen Darstellung;
- **Fig. 3**: die Kopfstütze gemäß **Fig. 2** in einer schematischen Perspektivansicht;
- **Fig. 4**: die Kopfstütze gemäß **Fig. 2** und **Fig. 3** in einer schematischen Perspektivansicht;
- **Fig. 5**: die Kopfstütze gemäß **Fig. 2** **-** **Fig. 4** in einer schematischen Perspektivansicht;
- **Fig. 6**: die Kopfstütze gemäß **Fig. 2** - **Fig. 5** in einer Schnittansicht;
- **Fig. 7**: die Kopfstütze gemäß **Fig. 2** - **Fig. 6** in einer Explosionsdarstellung;
- **Fig. 8**: einen Teil einer Kippvorrichtung der Kopfstütze gemäß **Fig. 2** **-** **Fig. 7** in einer schematischen Perspektivansicht;
- **Fig. 9**: einen Teil der Kopfstütze gemäß **Fig. 2** **-** **Fig. 7** in einer schematischen Perspektivansicht;
- **Fig. 10**: eine Kopfstütze gemäß einem zweiten Ausführungsbeispiel in einer schematischen Darstellung; und
- **Fig. 11**: die Kopfstütze gemäß **Fig. 10** in einer schematischen Darstellung.

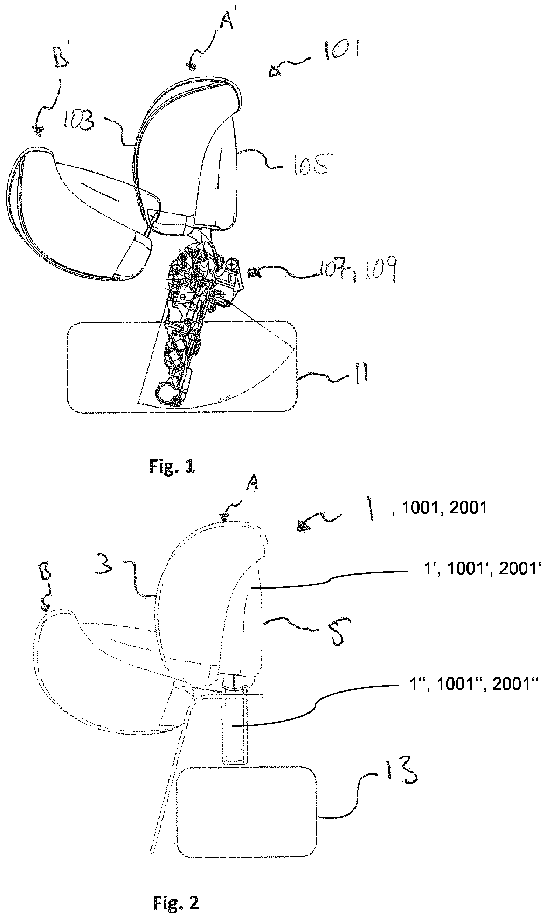

In der **Fig. 1** ist eine aus dem Stand der Technik bekannte Kopfstütze 101 in einer schematischen Darstellung dargestellt. Die Kopfstütze 101 umfasst eine einem in dem Fahrzeugsitz platznehmenden Insassen zugewandte Frontverkleidung 103 und eine von dem Insassen abgewandte Rückverkleidung 105. Die Kopfstütze 101 ist über eine Kippvorrichtung 107 und/oder Höheneinstellvorrichtung 109 mit einer nicht dargestellten Rückenlehne verbunden. Hierbei erstreckt sich die Kippvorrichtung 107 und/oder die Höheneinstellvorrichtung 109 zumindest teilweise in einem unterhalb der Kopfstütze 101, d.h. in Richtung der Schwerkraft, angeordneten ersten Bereich 11. In der **Fig. 1** ist die Kopfstütze in einer Ausgangsposition A' und in einer gekippten Position B' dargestellt. Eine hier dargestellte Kopfstütze 101 ist beispielsweise um 70 mm höhenverstellbar und um 70° kippbar ausgebildet.

In der **Fig. 2** ist eine Kopfstütze 1 mit einer Frontverkleidung 3 und einer Rückverkleidung 5 gemäß einem ersten Ausführungsbeispiel in einer schematischen Darstellung dargestellt. In **Fig. 2** ist ein zweiter Bereich 13 dargestellt, welcher von der erfindungsgemäßen Kopfstütze nicht ausgefüllt wird. Hierbei stellt der zweite Bereich 13 eine gegenüber dem in **Fig. 1** dargestellten ersten Bereich 11 mit der erfindungsgemäßen Kopfstütze erzielte Platzersparnis dar. Die Kopfstütze 1 gemäß dem ersten Ausführungsbeispiel ist beispielsweise um 70 mm höhenverstellbar und um 80° kippbar ausgebildet.

Außerdem zeigt **Fig. 2****,** dass die Kopfstütze 1 eine erste Kopfstützvorrichtung 1' und eine zweite Kopfstützvorrichtung 1" umfasst, wobei die Kopfstütze 1 eine in **Fig. 2** nicht dargestellte Kippvorrichtung 7 zum Kippen der ersten Kopfstützvorrichtung 1' relativ zu der zweiten Kopfstützvorrichtung 1" umfasst, wobei die Kopfstütze 1 eine in **Fig. 2** nicht dargestellte Höheneinstellvorrichtung 9 zum Einstellen der Höhe der ersten Kopfstützvorrichtung 1' relativ zu der zweiten Kopfstützvorrichtung 1" umfasst. Bevorzugt ist hierbei die zweite Kopfstützvorrichtung 1" mit dem Fahrzeugsitz, bevorzugt mit einer Rückenlehne des Fahrzeugsitzes, verbunden, bevorzugt kraftschlüssig und/oder formschlüssig und/oder stoffschlüssig verbunden. Außerdem sind die Kippvorrichtung 7 und/oder die Höheneinstellvorrichtung 9 zwischen einer, bevorzugt einem in dem Fahrzeugsitz platznehmenden Insassen zugewandten, Frontverkleidung 3 der Kopfstütze 1 und einer, bevorzugt von dem Insassen abgewandten, Rückverkleidung 5 der Kopfstütze 1 angeordnet. Ferner ist die Kippvorrichtung 7 und insbesondere auch die Höheneinstellvorrichtung 9 mithilfe einer Antriebseinheit 15 antreibbar, insbesondere elektrisch antreibbar, wobei die Antriebseinheit 15 vorzugsweise zwischen der Frontverkleidung und der Rückverkleidung 5 angeordnet ist.

Des Weiteren zeigt **Fig. 2****,** zumindest einen Teil eines Fahrzeugsitzes 1001 eines Kraftfahrzeugs, wobei der Fahrzeugsitz 1001 eine erste Fahrzeugsitzvorrichtung 1001' und eine zweite Fahrzeugsitzvorrichtung 1001" umfasst, wobei der Fahrzeugsitz 1001 eine Kippvorrichtung 7 zum Kippen der ersten Fahrzeugsitzvorrichtung 1001' relativ zu der zweiten Fahrzeugsitzvorrichtung 1001" umfasst, wobei der Fahrzeugsitz eine Höheneinstellvorrichtung 9 zum Einstellen der Höhe der ersten Fahrzeugsitzvorrichtung 1001' relativ zu der zweiten Fahrzeugsitzvorrichtung 1001" umfasst. Bevorzugt ist, dass die erste Fahrzeugsitzvorrichtung 1001' eine in den Fahrzeugsitz 1001 integrierte Kopfstütze umfasst und, dass die Kippvorrichtung 7 und/oder die Höheneinstellvorrichtung 9 zwischen einer, bevorzugt einem in dem Fahrzeugsitz platznehmenden Insassen zugewandten, Frontverkleidung 3 des Fahrzeugsitzes 1001 und einer, bevorzugt von dem Insassen abgewandten, Rückverkleidung 5 des Fahrzeugsitzes 1001 angeordnet sind.

Erfindungsgemäß bevorzugt ist vorgesehen, dass die erfindungsgemäße Kippvorrichtung 7 und die Höheneinstellvorrichtung 9 in einer Armstütze eines Fahrzeugsitzes verwendet werden. Bevorzugt umfasst die Armstütze eine erste Armstützvorrichtung und eine zweite Armstützvorrichtung, wobei die Armstütze eine Kippvorrichtung 7 zum Kippen der ersten Armstützvorrichtung relativ zu der zweiten Armstützvorrichtung umfasst, wobei die Armstütze eine Höheneinstellvorrichtung 9 zum Einstellen der Höhe der ersten Armstützvorrichtung relativ zu der zweiten Armstützvorrichtung umfasst. Bevorzugt ist die zweite Armstützvorrichtung mit dem Fahrzeugsitz, bevorzugt mit einem erfindungsgemäßen Fahrzeugsitz, besonders bevorzugt mit einer Rückenlehne des Fahrzeugsitzes und/oder mit einer Sitzfläche des Fahrzeugsitzes, verbunden, bevorzugt kraftschlüssig und/oder formschlüssig und/oder stoffschlüssig verbunden. Außerdem ist vorgesehen, dass die Kippvorrichtung 7 und/oder die Höheneinstellvorrichtung 9 zwischen einer, bevorzugt einem in dem Fahrzeugsitz platznehmenden Insassen zugewandten Frontverkleidung 3 der Armstütze und einer, bevorzugt von dem Insassen abgewandten, Rückverkleidung 5 der Armstütze angeordnet sind.

Ferner ist in **Fig. 2** eine erfindungsgemäße Vorrichtung 2001 dargestellt, wobei die Vorrichtung 2001 ein erstes Vorrichtungselement 2001' und ein zweites Vorrichtungselement 2001" umfasst, wobei die Vorrichtung eine Kippvorrichtung 7 zum Kippen des ersten Vorrichtungselements 2001' relativ zu dem zweiten Vorrichtungselement 2001" umfasst, wobei die Vorrichtung eine Höheneinstellvorrichtung 9 zum Einstellen der Höhe des ersten Vorrichtungselements 2001' relativ zu dem zweiten Vorrichtungselement 2001" umfasst.

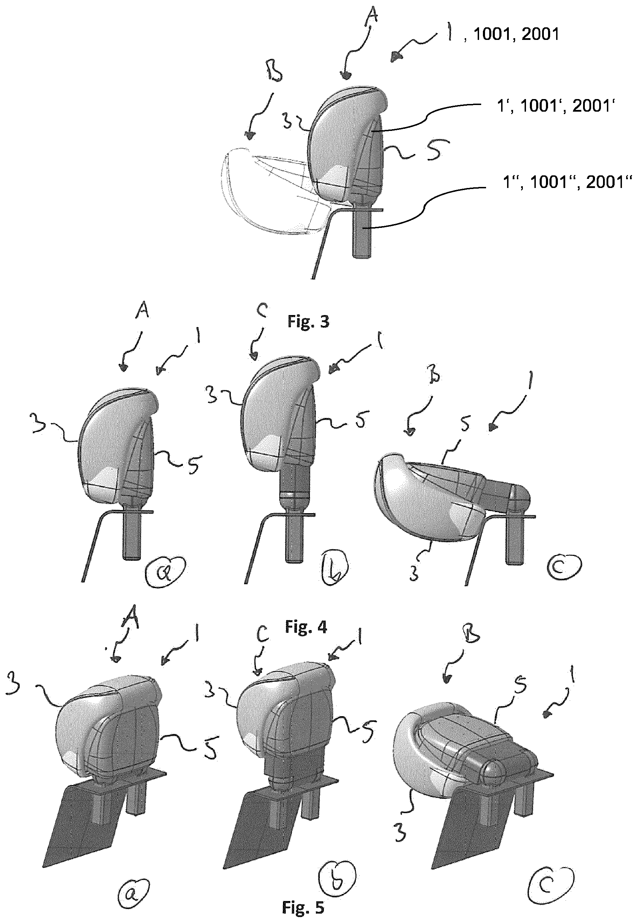

In den **Fig. 3** - **5** ist die Kopfstütze 1 gemäß **Fig. 2** in schematischen Perspektivansichten und in unterschiedlichen Stellungen dargestellt. **Fig. 4a** und **Fig. 5a** zeigen die Kopfstütze 1 in der Ausgangsposition A, **Fig. 4c** und **Fig. 5c** zeigen die Kopfstütze 1 in der gekippten Position B und **Fig. 4b** und **Fig. 5b** zeigen die Kopfstütze 1 in einer Zwischenposition C. Bei der Zwischenposition C ist die Kopfstütze lediglich in ihrer Höhe im Verglich zu der Ausgangsposition A verstellt. In dem in **Fig. 3-5** dargestellten Ausführungsbeispiel, wird die Kopfstütze 1 ausgehend von der Ausgangsposition A hin zu der Zwischenposition C lediglich in ihrer Höhe, beispielsweise um 70 mm, relativ zu einer nicht dargestellten Rückenlehne des Fahrzeugsitzes verstellt. Ausgehend von der Zwischenposition C hin zu der gekippten Position B, wird die Kopfstütze 1 lediglich relativ zu der nicht dargestellten Rückenlehne gekippt, beispielsweise um 80°.

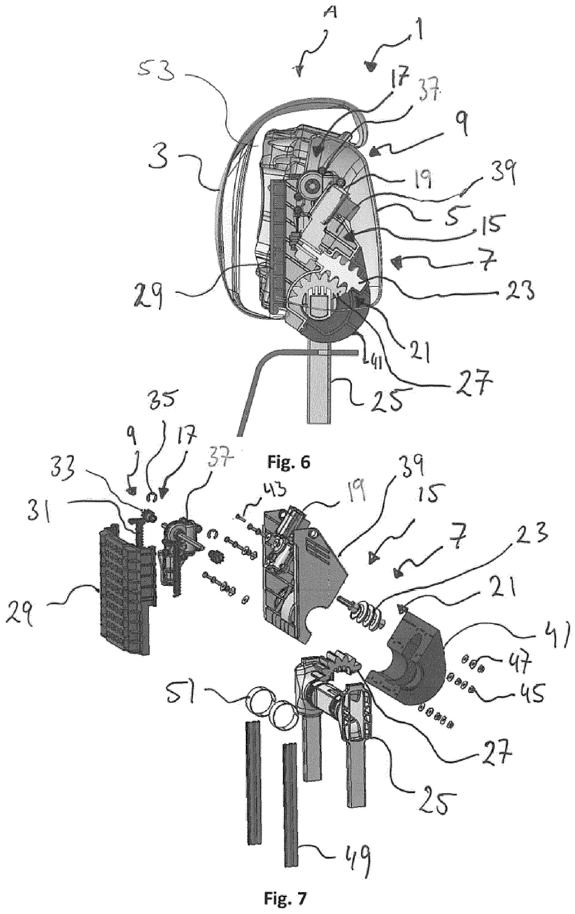

In **Fig. 6** ist die Kopfstütze gemäß **Fig. 2** - **Fig. 5** in einer Schnittansicht dargestellt. Hier ist zu erkennen, dass die Kopfstütze 1 eine Kippvorrichtung 7 zum Kippen der Kopfstütze relativ zu einer nicht dargestellten Rückenlehne des Fahrzeugsitzes und eine Höheneinstellvorrichtung 9 zum Einstellen der Höhe der Kopfstütze relativ zu der Rückenlehne des Fahrzeugsitzes umfasst. Außerdem zeigt **Fig. 6** eine Antriebseinheit 15 mit deren Hilfe die Kippvorrichtung 7 antreibbar ist und eine weitere Antriebseinheit 17 mit deren Hilfe die Höheneinstellvorrichtung 9 antreibbar ist. In dem in **Fig. 6** dargestellten Ausführungsbeispiel sind die Kippvorrichtung 7, die Höheneinstellvorrichtung 9, die Antriebseinheit 15 und die weitere Antriebseinheit 17 zwischen der Frontverkleidung 3 und der Rückverkleidung 5 angeordnet. Des Weiteren zeigt **Fig. 6****,** dass die Antriebseinheit 15 der Kippvorrichtung 7 einen Motor 19 und ein Schneckengetriebe 21 umfasst. Wie der **Fig. 6** entnommen werden kann umfasst das Schneckengetriebe 21 ein drehbar gelagertes und von dem Motor 19 antreibbares Schneckengewinde 23 sowie einen mit einer Kopfstützenhalterung 25 verbundenes gezahntes Element 27. Außerdem ist in dem Raum 53 bevorzugt Schaum angeordnet.

**Fig. 7** zeigt die Kopfstütze 1 gemäß **Fig. 2** **-** **Fig. 6** in einer Explosionsdarstellung. In **Fig. 7** sind weitere Bauteile der Kopfstütze 1 dargestellt. Somit zeigt **Fig. 7** beispielhaft eine Frontplatte 29 sowie zwei Zahnstangen 31, zwei Zahnräder 33, zwei Achsenspannelemente 35 und einen weiteren Motor 37 der Höheneinstellvorrichtung 9. Des Weiteren zeigt **Fig. 7** ein Haltelement 39, ein Abdeckelement 41, sowie Schrauben 43, Muttern 45, Unterlegscheiben 47, zwei Profile 49, insbesondere zwei Metallprofile 49, sowie zwei Gleitbuchsen 51. Beispielsweise ist das Gewicht des in **Fig. 7** dargestellten Moduls 1,17 kg.

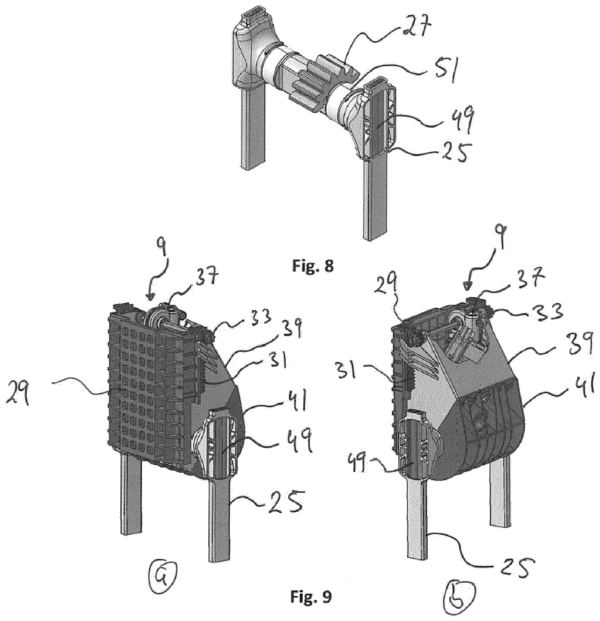

In **Fig. 8** und **Fig. 9** sind Teile der Kippvorrichtung 7 bzw. der Kopfstütze 1 gemäß **Fig. 2** **-** **Fig. 7** in schematischen Perspektivansichten dargestellt.

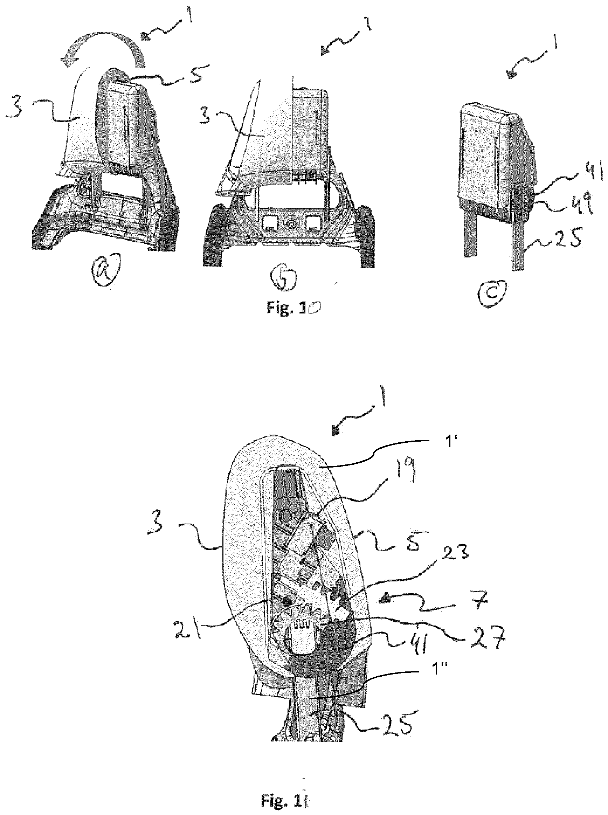

In **Fig. 10** und **Fig. 11** ist eine Kopfstütze 1 gemäß einem zweiten Ausführungsbeispiel in schematischen Darstellungen dargestellt. In dem zweiten Ausführungsbeispiel ist im Wesentlichen lediglich die Kippvorrichtung 7 des ersten Ausführungsbeispiels vorgesehen. Eine sich von der Höheneinstellvorrichtung 9 unterscheidende weitere Höheneinstellvorrichtung ist lediglich optional vorgesehen.

### Bezugszeichenliste

- 1, 101: Kopfstütze
- 1': Erste Kopfstützvorrichtung
- 1": Zweite Kopfstützvorrichtung
- 3, 103: Frontverkleidung
- 5, 105: Rückverkleidung
- 7, 107: Kippvorrichtung
- 9, 109: Höheneinstellvorrichtung
- 11: Erster Bereich
- 13: Zweiter Bereich
- 15: Antriebseinheit
- 17: Weitere Antriebseinheit
- 19: Motor
- 21: Schneckengetriebe
- 23: Schneckengewinde
- 25: Kopfstützenhalterung
- 27: Gezahntes Element
- 29: Frontplatte
- 31: Zahnstange
- 33: Zahnrad
- 35: Achsenspannelement
- 37: Weiterer Motor
- 39: Haltelement
- 41: Abdeckelement
- 43: Schraube
- 45: Mutter
- 47: Unterlegscheibe
- 49: Profil bzw. Metallprofil
- 51: Gleitbuchse
- 53: Raum
- 1001: Fahrzeugsitz
- 1001': erste Fahrzeugsitzvorrichtung
- 1001": zweite Fahrzeugsitzvorrichtung
- 2001: Vorrichtung
- 2001': erstes Vorrichtungselement
- 2001": zweites Vorrichtungselement

- A, A': Ausgangsposition
- B, B': gekippte Position
- C, C': Zwischenposition

## Patentansprüche

1. Kopfstütze (1) eines Fahrzeugsitzes, wobei die Kopfstütze (1) eine erste Kopfstützvorrichtung (1') und eine zweite Kopfstützvorrichtung (1") umfasst, wobei die Kopfstütze (1) eine Kippvorrichtung (7) zum Kippen der ersten Kopfstützvorrichtung (1') relativ zu der zweiten Kopfstützvorrichtung (1") umfasst, wobei die Kopfstütze (1) eine Höheneinstellvorrichtung (9) zum Einstellen der Höhe der ersten Kopfstützvorrichtung (1') relativ zu der zweiten Kopfstützvorrichtung (1") umfasst, wobei die Kippvorrichtung (7) mithilfe einer Antriebseinheit (15) antreibbar ist, wobei die Antriebseinheit (15) einen Motor und ein Schneckengetriebe umfasst, wobei die Kippvorrichtung (7) mithilfe des Schneckengetriebes antreibbar ist, wobei das Schneckengetriebe (21) ein drehbar gelagertes und von dem Motor (19) antreibbares Schneckengewinde (23) sowie ein starr mit einer Kopfstützhalterung (25) verbundenes gezahntes Element (27) umfasst.

2. Kopfstütze (1) nach Anspruch 1, wobei die Kippvorrichtung (7) und/oder die Höheneinstellvorrichtung (9) zwischen einer, bevorzugt einem in dem Fahrzeugsitz platznehmenden Insassen zugewandten, Frontverkleidung (3) der Kopfstütze (1) und einer, bevorzugt von dem Insassen abgewandten, Rückverkleidung (5) der Kopfstütze (1) angeordnet sind.

3. Kopfstütze (1) nach einem der vorhergehenden Ansprüche, wobei die Kippvorrichtung (7) und/oder die Höheneinstellvorrichtung (9) mithilfe der Antriebseinheit (15) elektrisch antreibbar sind.

4. Kopfstütze (1) nach einem der vorhergehenden Ansprüche, wobei die Antriebseinheit (15) zwischen der Frontverkleidung (3) und der Rückverkleidung (5) angeordnet ist.

5. Fahrzeugsitz (1001) eines Kraftfahrzeugs, wobei der Fahrzeugsitz (1001) eine erste Fahrzeugsitzvorrichtung (1001') und eine zweite Fahrzeugsitzvorrichtung (1001") umfasst, wobei der Fahrzeugsitz (1001) eine Kippvorrichtung (7) zum Kippen der ersten Fahrzeugsitzvorrichtung (1001') relativ zu der zweiten Fahrzeugsitzvorrichtung (1001") umfasst, wobei der Fahrzeugsitz eine Höheneinstellvorrichtung (9) zum Einstellen der Höhe der ersten Fahrzeugsitzvorrichtung (1001') relativ zu der zweiten Fahrzeugsitzvorrichtung (1001") umfasst, wobei die Kippvorrichtung (7) mithilfe einer Antriebseinheit antreibbar ist, wobei die Antriebseinheit einen Motor und ein Schneckengetriebe umfasst, wobei die Kippvorrichtung (7) mithilfe des Schneckengetriebes antreibbar ist, wobei das Schneckengetriebe (21) ein drehbar gelagertes und von dem Motor (19) antreibbares Schneckengewinde (23) sowie ein starr mit einer Kopfstützhalterung (25) verbundenes gezahntes Element (27) umfasst.

6. Fahrzeugsitz (1001) nach Anspruch 5, wobei die Kippvorrichtung (7) und/oder die Höheneinstellvorrichtung (9) zwischen einer, bevorzugt einem in dem Fahrzeugsitz platznehmenden Insassen zugewandten, Frontverkleidung (3) des Fahrzeugsitzes (1001) und einer, bevorzugt von dem Insassen abgewandten, Rückverkleidung (5) des Fahrzeugsitzes (1001) angeordnet sind.

7. Fahrzeugsitz (1001) nach Anspruch 5 oder 6, wobei die erste Fahrzeugsitzvorrichtung (1001') eine in den Fahrzeugsitz (1001) integrierte Kopfstütze umfasst.

8. Vorrichtung (2001), wobei die Vorrichtung (2001) ein erstes Vorrichtungselement (2001') und ein zweites Vorrichtungselement (2001") umfasst, wobei die Vorrichtung eine Kippvorrichtung (7) zum Kippen des ersten Vorrichtungselements (2001') relativ zu dem zweiten Vorrichtungselement (2001") umfasst, wobei die Vorrichtung eine Höheneinstellvorrichtung (9) zum Einstellen der Höhe des ersten Vorrichtungselements (2001') relativ zu dem zweiten Vorrichtungselement (2001") umfasst, wobei die Kippvorrichtung (7) mithilfe einer Antriebseinheit antreibbar ist, wobei die Antriebseinheit einen Motor und ein Schneckengetriebe umfasst, wobei die Kippvorrichtung (7) mithilfe des Schneckengetriebes antreibbar ist, wobei das Schneckengetriebe (21) ein drehbar gelagertes und von dem Motor (19) antreibbares Schneckengewinde (23) sowie ein starr mit einer Kopfstützhalterung (25) verbundenes gezahntes Element (27) umfasst.

## Claims

1. Headrest (1) of a vehicle seat, wherein the headrest (1) comprises a first headrest device (1') and a second headrest device (1"), wherein the headrest (1) comprises a tilting device (7) for tilting the first headrest device (1') relative to the second headrest device (1"), wherein the headrest (1) comprises a height-adjusting device (9) for adjusting the height of the first headrest device (1') relative to the second headrest device (1"), wherein the tilting device (7) can be driven by means of a drive unit (15), wherein the drive unit (15) comprises a motor and a worm gear, wherein the tilting device (7) can be driven by means of the worm gear, wherein the worm gear (21) comprises a rotatably mounted worm thread (23) which can be driven by the motor (19), and a toothed element (27) which is rigidly connected to a headrest mount (25).

2. Headrest (1) according to Claim 1, wherein the tilting device (7) and/or the height-adjusting device (9) are or is arranged between a front cladding (3) of the headrest (1) that preferably faces an occupant seated in the vehicle seat and a rear cladding (5) of the headrest (1) that preferably faces away from the occupant.

3. Headrest (1) according to one of the preceding claims, wherein the tilting device (7) and/or the height-adjusting device (9) can be electrically driven by means of the drive unit (15).

4. Headrest (1) according to one of the preceding claims, wherein the drive unit (15) is arranged between the front cladding (3) and the rear cladding (5) .

5. Vehicle seat (1001) of a motor vehicle, wherein the vehicle seat (1001) comprises a first vehicle seat device (1001') and a second vehicle seat device (1001"), wherein the vehicle seat (1001) comprises a tilting device (7) for tilting the first vehicle seat device (1001') relative to the second vehicle seat device (1001"), wherein the vehicle seat comprises a height-adjusting device (9) for adjusting the height of the first vehicle seat device (1001') relative to the second vehicle seat device (1001"), wherein the tilting device (7) can be driven by means of a drive unit, wherein the drive unit comprises a motor and a worm gear, wherein the tilting device (7) can be driven by means of the worm gear, wherein the worm gear (21) comprises a rotatably mounted worm thread (23) which can be driven by the motor (19), and a toothed element (27) which is rigidly connected to a headrest mount (25).

6. Vehicle seat (1001) according to Claim 5, wherein the tilting device (7) and/or the height-adjusting device (9) are or is arranged between a front cladding (3) of the vehicle seat (1001) that preferably faces an occupant seated in the vehicle seat and a rear cladding (5) of the vehicle seat (1001) that preferably faces away from the occupant.

7. Vehicle seat (1001) according to Claim 5 or 6, wherein the first vehicle seat device (1001') comprises a headrest which is integrated into the vehicle seat (1001).

8. Device (2001), wherein the device (2001) comprises a first device element (2001') and a second device element (2001"), wherein the device comprises a tilting device (7) for tilting the first device element (2001') relative to the second device element (2001"), wherein the device comprises a height-adjusting device (9) for adjusting the height of the first device element (2001') relative to the second device element (2001"), wherein the tilting device (7) can be driven by means of a drive unit, wherein the drive unit comprises a motor and a worm gear, wherein the tilting device (7) can be driven by means of the worm gear, wherein the worm gear (21) comprises a rotatably mounted worm thread (23) which can be driven by the motor (19), and a toothed element (27) which is rigidly connected to a headrest mount (25).

## Revendications

1. Appui-tête (1) d'un siège de véhicule, l'appui-tête (1) comprenant un premier dispositif d'appui-tête (1') et un deuxième dispositif d'appui-tête (1"), l'appui-tête (1) comprenant un dispositif d'inclinaison (7) pour incliner le premier dispositif d'appui-tête (1') par rapport au deuxième dispositif d'appui-tête (1"), l'appuie-tête (1) comprenant un dispositif de réglage de hauteur (9) pour régler la hauteur du premier dispositif d'appui-tête (1') par rapport au deuxième dispositif d'appui-tête (1"), le dispositif d'inclinaison (7) pouvant être entraîné à l'aide d'une unité d'entraînement (15), l'unité d'entraînement (15) comprenant un moteur et un engrenage à vis sans fin, le dispositif d'inclinaison (7) pouvant être entraîné à l'aide de l'engrenage à vis sans fin, l'engrenage à vis sans fin (21) comprenant un filet de vis sans fin (23) monté de manière rotative et pouvant être entraîné par le moteur (19), ainsi qu'un élément denté (27) relié de manière rigide à un support d'appui-tête (25).

2. Appui-tête (1) selon la revendication 1, le dispositif d'inclinaison (7) et/ou le dispositif de réglage de hauteur (9) étant agencés entre un revêtement avant (3) de l'appui-tête (1), de préférence tourné vers un occupant prenant place dans le siège du véhicule, et un revêtement arrière (5) de l'appui-tête (1), de préférence détourné de l'occupant.

3. Appui-tête (1) selon l'une quelconque des revendications précédentes, le dispositif d'inclinaison (7) et/ou le dispositif de réglage de hauteur (9) pouvant être entraînés électriquement à l'aide de l'unité d'entraînement (15).

4. Appui-tête (1) selon l'une quelconque des revendications précédentes, l'unité d'entraînement (15) étant agencée entre le revêtement avant (3) et le revêtement arrière (5).

5. Siège de véhicule (1001) d'un véhicule automobile, le siège de véhicule (1001) comprenant un premier dispositif de siège de véhicule (1001') et un deuxième dispositif de siège de véhicule (1001"), le siège de véhicule (1001) comprenant un dispositif d'inclinaison (7) pour incliner le premier dispositif de siège de véhicule (1001') par rapport au deuxième dispositif de siège de véhicule (1001''), le siège de véhicule comprenant un dispositif de réglage de hauteur (9) pour régler la hauteur du premier dispositif de siège de véhicule (1001') par rapport au deuxième dispositif de siège de véhicule (1001"), le dispositif d'inclinaison (7) pouvant être entraîné à l'aide d'une unité d'entraînement, l'unité d'entraînement comprenant un moteur et un engrenage à vis sans fin, le dispositif d'inclinaison (7) pouvant être entraîné à l'aide de l'engrenage à vis sans fin, l'engrenage à vis sans fin (21) comprenant un filet de vis sans fin (23) monté de manière rotative et pouvant être entraîné par le moteur (19), ainsi qu'un élément denté (27) relié de manière rigide à un support d'appui-tête (25).

6. Siège de véhicule (1001) selon la revendication 5, le dispositif d'inclinaison (7) et/ou le dispositif de réglage de hauteur (9) étant agencés entre un revêtement avant (3) du siège de véhicule (1001), de préférence tourné vers un occupant prenant place dans le siège de véhicule, et un revêtement arrière (5) du siège de véhicule (1001), de préférence détourné de l'occupant.

7. Siège de véhicule (1001) selon la revendication 5 ou 6, le premier dispositif de siège de véhicule (1001') comprenant un appui-tête intégré dans le siège de véhicule (1001).

8. Dispositif (2001), le dispositif (2001) comprenant un premier élément de dispositif (2001') et un deuxième élément de dispositif (2001"), le dispositif comprenant un dispositif d'inclinaison (7) pour incliner le premier élément de dispositif (2001') par rapport au deuxième élément de dispositif (2001"), le dispositif comprenant un dispositif de réglage de hauteur (9) pour régler la hauteur du premier élément de dispositif (2001') par rapport au deuxième élément de dispositif (2001"), le dispositif d'inclinaison (7) pouvant être entraîné à l'aide d'une unité d'entraînement, l'unité d'entraînement comprenant un moteur et un engrenage à vis sans fin, le dispositif d'inclinaison (7) pouvant être entraîné à l'aide de l'engrenage à vis sans fin, l'engrenage à vis sans fin (21) comprenant un filet de vis sans fin (23) monté de manière rotative et pouvant être entraîné par le moteur (19), ainsi qu'un élément denté (27) relié de manière rigide à un support d'appui-tête (25).
